# EUROPEAN PATENT APPLICATION

(11) **EP 4 134 638 A1**
(43) Date of publication of application: **15.02.2023**
(21) Application number: 22190002.0
(22) Date of filing: 11.08.2022
(51) Int. Cl.: G01G 19/393, B65B 1/32, B65B 37/18, B65B 57/14

(54) **WEIGHING AND PACKAGING SYSTEM**

(30) Priority: 12.08.2021 JP 2021131619
(71) Applicant: ISHIDA CO., Ltd., Kyoto-shi, Kyoto 606-8392 (JP)
(72) Inventor: ICHIKAWA, Makoto, Ritto-shi, Shiga, 520-3026 (JP); HASHIMOTO, Satoshi, Ritto-shi, Shiga, 520-3026 (JP); OHTANI, Takafumi, Ritto-shi, Shiga, 520-3026 (JP); TONG, Yuchuan, Ritto-shi, Shiga, 520-3026 (JP); SASAKI, Ryo, Ritto-shi, Shiga, 520-3026 (JP)
(74) Representative: Gill Jennings & Every LLP

(57) **Abstract**

<Problem>

A problem of the present invention is to discover a tendency of time data to fluctuate while information regarding a time at which articles pass through a prescribed position is monitored, and prevent biting of articles during transverse sealing in advance. (Solution) In a weighing and packaging system 1, an analysis unit 714 ascertains a fluctuation tendency in a time series for a measured value of information pertaining to a time in which a group of articles C passes between a light-projecting unit 27a and a light-receiving unit 27b of a detection sensor 27 of a bag-making and packaging unit 3, and adjusts a transverse seal timing or a cycle time in accordance with the fluctuation tendency. As a result, articles can be prevented in advance from being bitten during transverse sealing.

## Description

### TECHNICAL FIELD

The present invention relates to a weighing and packaging system.

### BACKGROUND ART

Conventionally, in a weighing and packaging system, a sensor detects a timing at which articles released from a weighing apparatus into a bag-making and packaging machine pass through a prescribed position on an upstream side of a former tube, and a timing of transverse sealing is adjusted. For example, in the vertical bag-making and packaging machine disclosed in Patent Literature 1 (Japanese Laid-open Patent Publication No. 2003-11927), on the basis of results from detection performed by a sensor, a control unit: determines a gap (separation length) between a dropping tailing end of a preceding amassed article and a dropping leading end of a following amassed article, and a vertical length (charge length) of an amassed article; compares the separation length with a prescribed value; and automatically adjusts a timing at which articles are released, a cycle time of the bag-making and packaging machine, and the timing of transverse sealing.

### SUMMARY OF THE INVENTION

### (Technical Problem)

However, relative density changes by lot depending on the articles, and drop time therefore tends to vary when the relative density of the articles decreases. Therefore, there is an increased possibility that articles will be bitten during transverse sealing.

A problem of the present invention is to discover a tendency of time data to fluctuate while information regarding the time at which articles pass through a prescribed position is monitored, and prevent biting of articles during transverse sealing in advance.

### (Solution to Problem)

A weighing and packaging system according to a first aspect comprises a weighing unit, a bag-making and packaging unit, a measurement unit, a storage unit, and an analysis unit. The weighing unit discharges a weighed group of articles. The bag-making and packaging unit forms a packaging material into a cylinder while conveying the packaging material and guides the group of articles discharged from the weighing unit into the cylindrical packaging material. The measurement unit measures information pertaining to a time in which the group of articles discharged from the weighing unit passes through a prescribed position in the bag-making and packaging unit. The storage unit stores a measured value acquired by the measurement unit as time series data. The analysis unit analyzes the time series data stored in the storage unit.

In the weighing and packaging system according to the first aspect, the analysis unit ascertains a fluctuation tendency in a time series for a measured value of information pertaining to the time in which a group of articles passes through a prescribed position in the bag-making and packaging unit, and adjusts the transverse seal timing or cycle time in accordance with the fluctuation tendency. As a result, articles can be prevented in advance from being bitten during transverse sealing.

A weighing and packaging system according to a second aspect is the weighing and packaging system according to the first aspect, wherein the analysis unit analyzes an amount of fluctuation in the measured value in a fixed period of time, and changes operating parameters for the bag-making and packaging unit on the basis the analysis result.

A weighing and packaging system according to a third aspect is the weighing and packaging system according to the first or second aspect, further comprising a notification unit. The notification unit notifies a worker when the result of the analysis performed by the analysis unit deviates from a preset reference value.

A weighing and packaging system according to a fourth aspect is the weighing and packaging system according to any one of the first through third aspects, wherein the system further comprises a sensor. The sensor senses the group of articles passing through the prescribed position. The measurement unit measures times at which a front end and a rear end of the group of articles passes through the prescribed position on the basis of a sensory value of the sensor.

In the weighing and packaging system according to the fourth aspect, a width of a signal change before and after a group of articles is sensed denotes the time for a group of articles to pass through, and it is therefore possible to measure a length of time from when the front end of the group of articles passes through the prescribed position until the rear end passes through.

Therefore, the cycle time can be adjusted in accordance with a fluctuation tendency of this length of time. For example, when the length of time extends, the group of articles will not drop within the cycle time; therefore, capacity will be limited.

A weighing and packaging system according to a fifth aspect is the weighing and packaging system according to any one of the first through fourth aspects, further comprising a display unit. The display unit displays the fluctuation tendency of the measured value using the time series data.

In the weighing and packaging system according to the fifth aspect, an operator can visually check the fluctuation tendency of the measured value. The operator can ascertain the fluctuation tendency of the measured value between lots and with each lot, and can utilize the fluctuation tendency to adjust the timing or cycle time of transverse sealing at the time of initial setting or after stopping.

In addition, production capacity can be adjusted while observing the fluctuation tendency of the measured value even in steps other than that of the bag-making and packaging unit.

A weighing and packaging system according to a sixth aspect is the weighing and packaging system according to the fifth aspect, wherein the display unit displays a time from when the group of articles is discharged by the weighing unit until the front end of the group of articles passes through the prescribed position.

In the weighing and packaging system according to the sixth aspect, if the time from when the group of articles is discharged from the weighing unit until the front end passes through the prescribed position is displayed in a time series, the fluctuation tendency of the dropping time of the group of articles will be understood, and the timing of transverse sealing can therefore be adjusted in accordance with the fluctuation tendency. For example, when the time at which the articles drop tends to be delayed, the timing of transverse sealing is delayed.

A weighing and packaging system according to a seventh aspect is the weighing and packaging system according to the fifth or sixth aspect, wherein the display unit displays times at which the front end and rear end of the group of articles pass through the prescribed position.

In the weighing and packaging system according to the seventh aspect, a length of time from when the front end of the group of articles passes through until the rear end passes through is understood, and it is therefore possible to adjust the cycle time in accordance with the fluctuation tendency of this length of time. For example, when the length of time extends, the group of articles will not drop within the cycle time; therefore, capacity will be limited.

A weighing and packaging system according to an eighth aspect comprises a weighing unit, a bag-making and packaging unit, a measurement unit, a storage unit, and a display unit. The weighing unit discharges a weighed group of articles. The bag-making and packaging unit forms a packaging material into a cylinder while conveying the packaging material and guides the group of articles discharged from the weighing unit into the cylindrical packaging material. The measurement unit measures information pertaining to a time in which the group of articles discharged from the weighing unit passes through a prescribed position in the bag-making and packaging unit. The storage unit stores a measured value acquired by the measurement unit as time series data. The display unit displays a fluctuation tendency of the measured value using the time series data.

A weighing and packaging system according to a ninth aspect is the weighing and packaging system according to any one of the fifth through eighth aspects, wherein the display unit displays the measured value by length of the measured value for each timing at which articles drop.

### (Effect of the Invention)

In the weighing and packaging system according to the present invention, an analysis unit ascertains a fluctuation tendency in a time series for a measured value of information pertaining to the time in which a group of articles passes through a prescribed position of a bag-making and packaging unit, and adjusts a timing or cycle time of transverse sealing in accordance with the fluctuation tendency. As a result, articles can be prevented in advance from being bitten during transverse sealing.

### BRIEF DESCRIPTION OF THE DRAWINGS

FIG. 1 is a perspective view of a weighing and packaging system according to one embodiment of the present invention.
FIG. 2 is a conceptual diagram showing a configuration of the weighing and packaging system of FIG. 1.
FIG. 3 is a perspective view showing a schematic configuration of a bag-making and packaging unit.
FIG. 4 is a schematic side view of a transverse sealing mechanism.
FIG. 5 is a side view of a pair of first sealing jaws that turn.
FIG. 6 is a block diagram of a control unit.
FIG. 7 is a side view of an interior of a cylindrical film when groups of articles are passing through.
FIG. 8 is a graph showing a tendency of a charge length to fluctuate.
FIG. 9 is a side view of a cylindrical film for showing a height position of a detection sensor in a weighing and packaging system according to a modification.

### DESCRIPTION OF EMBODIMENTS

The embodiment of the present invention will be described while referring to the drawings. The embodiment described below is one specific example of the present invention, and is not intended to limit the technical scope of the present invention.

### (1) Configuration of weighing and packaging system 1

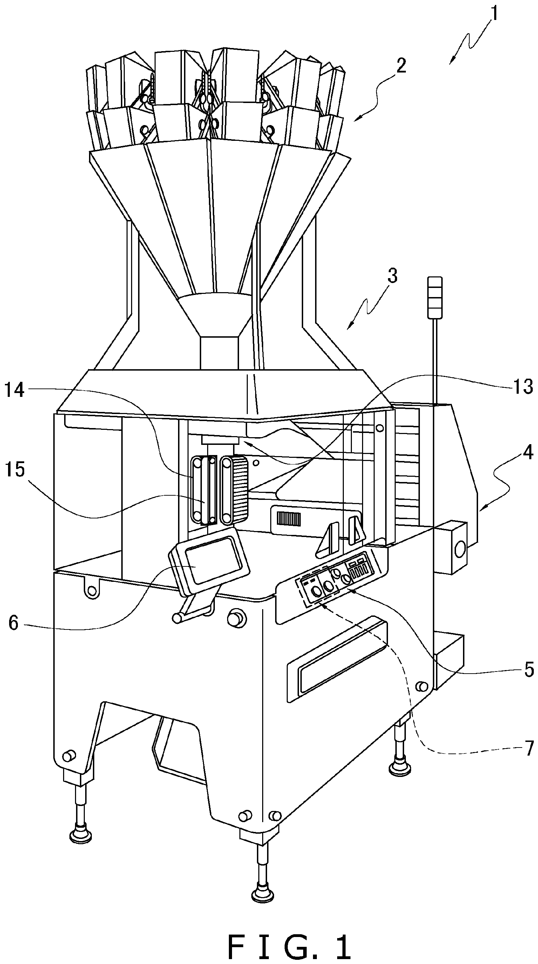

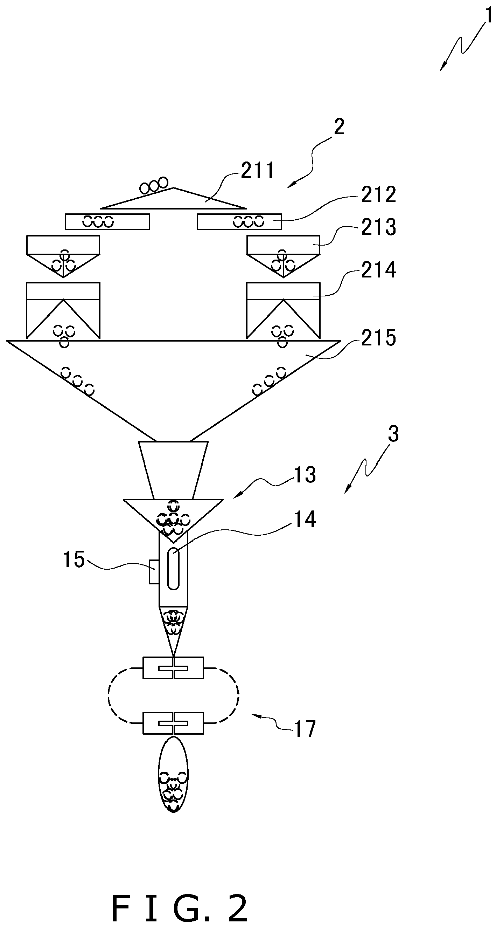

FIG. 1 is a perspective view of a weighing and packaging system 1 according to one embodiment of the present invention. FIG. 2 is a conceptual diagram showing a configuration of the weighing and packaging system 1 of FIG. 1. In FIGS. 1 and 2, the weighing and packaging system 1 comprises a combination weighing unit 2, a bag-making and packaging unit 3, a film supply unit 4, operation switches 5, a liquid crystal display 6, and a control unit 7.

### (1-1) Combination weighing unit 2

The combination weighing unit 2 is arranged above the bag-making and packaging unit 3. The combination weighing unit 2 measures weights of articles C in a plurality of weighing hoppers and combines values of the weights measured in the weighing hoppers so that a prescribed combined total weight is reached.

In the present embodiment, the description presumes that the articles C are snack foods such as potato chips.

The combination weighing unit 2 then discharges the articles C, in the prescribed combined total weight, downward to supply the bag-making and packaging unit 3.

In FIG. 2, when the articles C, which are objects to be packaged, are conveyed above the combination weighing unit 2, the articles are placed on a dispersion feeder 211 and radially dispersed by vibration of the dispersion feeder 211.

When the articles C are sent through a radial trough 212, which is continuous with the dispersion feeder 211, to a plurality of pool hoppers 213 arranged in a circumferential formation, the articles are temporarily pooled in the hoppers and then released into weighing hoppers 214 positioned below the pool hoppers 213.

The weights of the articles C released into the weighing hoppers 214 are measured by load cells (weight-sensing devices) provided to the weighing hoppers 214. Combination calculations are then performed on the basis of the measured weights of the products in the weighing hoppers 214 to determine from which weighing hoppers 214 the products should be discharged so that the weights or quantities are within a permissible range, and on the basis of the results thereof, some of the weighing hoppers 214 discharge the articles C to a collective discharge chute 215.

### (1-2) Bag-making and packaging unit 3

The bag-making and packaging unit 3 seals and packages the articles C in bags in accordance with timings at which the articles C are supplied from the combination weighing unit 2. A detailed configuration and operation of the bag-making and packaging unit 3 shall be described later.

### (1-3) Film supply unit 4

The film supply unit 4 is set up adjacent to the bag-making and packaging unit 3, and unreels a film to be shaped into a bag and supplies the film to the bag-making and packaging unit 3. A film roll onto which the film is wound is installed in the film supply unit 4.

### (1-4) Operation switches 5 and liquid crystal display 6

The operation switches 5 and the liquid crystal display 6 are attached to a front surface of a body of the weighing and packaging system 1. The liquid crystal display 6 is a touch panel display and is positioned so as to be visible to an operator of the operation switches 5.

The operation switches 5 and the liquid crystal display 6 function as input devices that receive instructions concerning the weighing and packaging system 1 and settings pertaining to the weighing and packaging system 1. The liquid crystal display 6 functions as an output device that displays information pertaining to the weighing and packaging system 1.

### (1-5) Control unit 7

On the basis of input from the operation switches 5 and the liquid crystal display 6, the control unit controls the combination weighing unit 2, the bag-making and packaging unit 3, and the film supply unit 4, and outputs information of various kinds to the liquid crystal display 6. A detailed configuration and operation of the control unit 7 shall be described later.

### (2) Configuration of bag-making and packaging unit

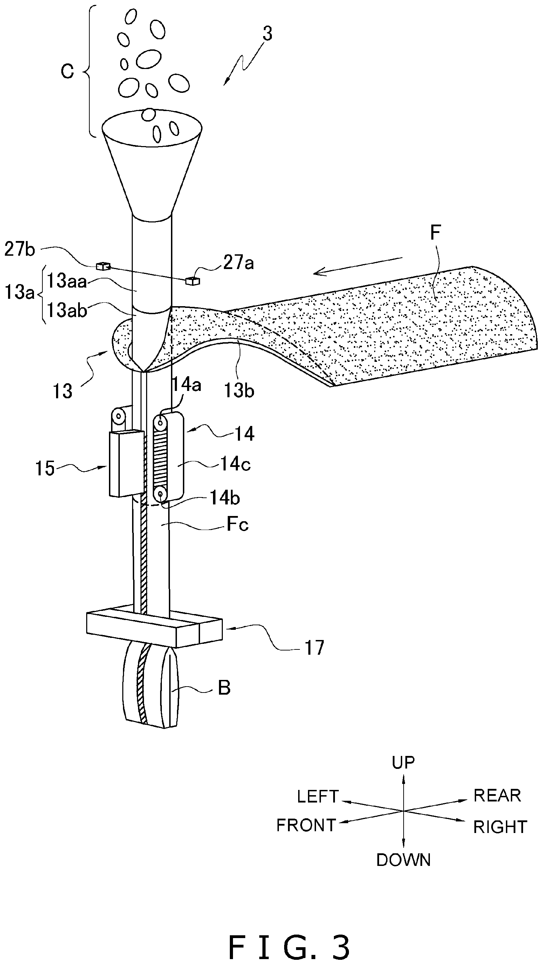

FIG. 3 is a perspective view showing a simplified configuration of the bag-making and packaging unit 3. In FIG. 3, six directions are defined, including "front (front surface)," "rear (back surface)," "up," "down," "left," and "right."

The bag-making and packaging unit 3 is configured mainly from a shaping mechanism 13, a pull-down belt mechanism 14, a longitudinal sealing mechanism 15, and a transverse sealing mechanism 17. The shaping mechanism 13 shapes a sheet-shaped film F, which is supplied from the film supply unit 4, into a tube shape.

The transverse sealing mechanism 17 seals the cylindrical film Fc in a transverse direction orthogonal to the conveying direction, forming bags B which are sealed at their top edge portion and bottom edge portion.

The weighing and packaging system 1 has two operating modes: a continuous mode, in which bags B are formed while the film F is conveyed continuously, and an intermittent mode, in which bags B are formed while the film F is conveyed intermittently. The continuous mode is an operating mode in which bags B are formed without stopping conveyance of the film F. The intermittent mode is an operating mode in which bags B are formed while the conveyance of the film F is temporarily stopped at prescribed timings.

In the continuous mode, the bag-making and packaging unit 3 seals the film F being conveyed. In the intermittent mode, at timings at which the conveyance of the film F has stopped, the bag-making and packaging unit 3 seals the stopped film F. The control unit 7 of the weighing and packaging system 1 controls the bag-making and packaging unit 3 in accordance with the operating mode.

### (2-1) Shaping mechanism 13

The shaping mechanism 13 has a tube 13a and a former 13b. The tube 13a is a funnel-shaped member open at upper and lower ends. Articles C supplied from the combination weighing unit 2 are released into the opening in the upper end of the tube 13a.

The cylindrical portion of the tube 13a has an upper/lower two-level structure, the upper level being a clear acrylic first tube 13aa and the lower level being a metal second tube 13ab.

The former 13b is arranged so as to encircle the tube 13a. As the film F reeled out from the film roll of the film supply unit 4 passes through a gap between the tube 13a and the former 13b, the film wraps about the tube 13a to form a tube shape. The tube 13a and the former 13b can be swapped out according to the size of the bags B being manufactured.

### (2-2) Pull-down belt mechanism 14

The pull-down belt mechanism 14 downwardly conveys the film F, which has wrapped about the tube 13a, while holding the film under suction. The pull-down belt mechanism 14 mainly has a driven roller 14a, a driving roller 14b, and a pair of belts 14c. The pair of belts 14c have a suction holding mechanism. The suction holding mechanism is arranged so as to sandwich the tube 13a on the left and right sides thereof, thus suction-holding the film F shaped into a tube. The pull-down belt mechanism 14 downwardly conveys the film F shaped into a tube due to the pair of belts 14c being rotatably driven by the driven roller 14a and the driving roller 14b.

### (2-3) Longitudinal sealing mechanism 15

The longitudinal sealing mechanism 15 seals the tube-shaped film F in the longitudinal direction (the vertical direction in FIG. 3). The longitudinal sealing mechanism 15 is arranged on a front-surface side of the tube 13a. A drive mechanism (not illustrated) moves the longitudinal sealing mechanism 15 in the forward-backward direction so as to approach or move away from the tube 13a.

By driving the longitudinal sealing mechanism 15 closer to the tube 13a using the drive mechanism, longitudinal-direction overlapping portions of the film F wrapped about the tube 13a are sandwiched between the longitudinal sealing mechanism 15 and the tube 13a.

The overlapping portions of the film F are heated while being pressed against the tube 13a under fixed pressure by the drive mechanism, sealing the longitudinal-direction overlapping portions of the film F and forming a cylindrical film Fc.

The longitudinal sealing mechanism 15 has a heater for heating the overlapping portions of the film F, a heater belt that contacts the overlapping portions of the film F, and the like.

### (2-4) Transverse sealing mechanism 17

The transverse sealing mechanism 17 seals the cylindrical film Fc in the transverse direction (the forward-backward direction in FIG. 3). The transverse sealing mechanism 17 is arranged below the shaping mechanism 13, the pull-down belt mechanism 14, and the longitudinal sealing mechanism 15.

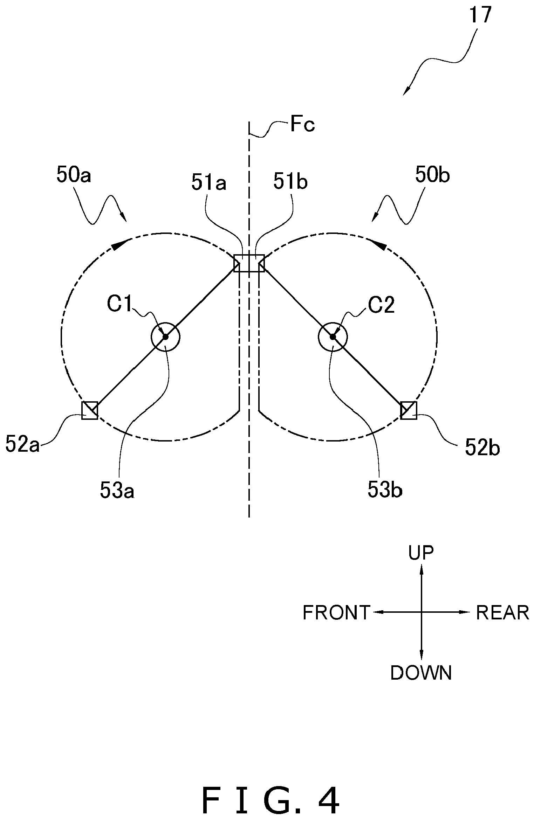

Figure 4 is a schematic side view of the lateral sealing mechanism 17. The direction perpendicular to the image plane in FIG. 4 is the left-right direction in FIG. 3. The transverse sealing mechanism 17 comprises mainly a first rotating body 50a and a second rotating body 50b.

The first rotating body 50a is arranged on the front side of the cylindrical film Fc. The second rotating body 50b is arranged on the rear side of the cylindrical film Fc.

The first rotating body 50a comprises a first rotating shaft 53a, a first sealing jaw 51a, and a second sealing jaw 52a. The second rotating body 50b comprises a second rotating shaft 53b, a first sealing jaw 51b, and a second sealing jaw 52b.

With the first rotating shaft 53a as a rotating shaft, the first rotating body 50a rotates about the rotational center C1 of the first rotating shaft 53a. With the second rotating shaft 53b as a rotating shaft, the second rotating body 50b rotates about the rotational center C2 of the second rotating shaft 53b.

The pair of first sealing jaws 51a, 51b rotate synchronously in opposite directions from each other, and the pair of second sealing jaws 52a, 52b rotate synchronously in opposite directions from each other. The paths of the two-dash broken lines shown in FIG. 4 represent the paths of the turning motions of the pair of first sealing jaws 51a, 51b and the pair of second sealing jaws 52a, 52b.

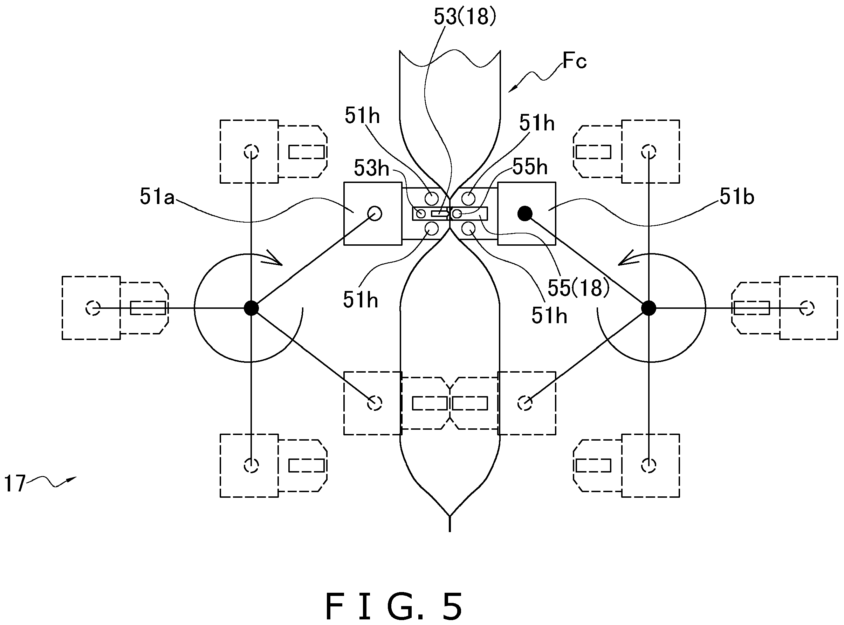

FIG. 5 is a side view of the turning pair of first sealing jaws 51a, 51b. The transverse sealing operation shall be described below using the pair of first sealing jaws 51a, 51b of FIG. 5.

The transverse sealing mechanism 17 causes the pair of first sealing jaws 51a, 51b to turn so as to trace mutually symmetrical D-shaped paths, and presses the jaws against each other so as to sandwich the area of the cylindrical film Fc that is to be transversely sealed.

In the present embodiment, a D operation, in which the pair of first sealing jaws 51a, 51b (or the pair of second sealing jaws 52a, 52b) move trace D-shaped paths, is adopted as the transverse sealing operation. The transverse sealing operation is not limited to the D operation; a box operation, an intermittent operation, or a rotary operation may be employed instead.

The transverse sealing mechanism 17 compression-bonds the transverse sealing portion due to the pair of first sealing jaws 51a, 51b sandwiching the cylindrical film Fc, and heat is therefore needed in addition to pressure for creating a seal. Therefore, first heaters 51h are housed within the pair of first sealing jaws 51a, 51b in order to heat contacting surfaces thereof. This makes it possible for the pair of first sealing jaws 51a, 51b to heat-seal the cylindrical film Fc in the transverse direction by heating the area that is to be transversely sealed while sandwiching the cylindrical film Fc.

The control unit 7 controls the first heaters 51h individually and adjusts the pair of first sealing jaws 51a, 51b to an appropriate sealing temperature.

In a center position of the transverse sealing portion, a fusion cutting mechanism 18 is housed in the transverse sealing mechanism 17 in order to cut away the trailing cylindrical film Fc from the bags. Specifically, a fusion cutting blade 53 is housed in one of the pair of first sealing jaws 51a, 51b, and a receiving blade 55 is housed in the other. In addition, a second heater 53h is housed in the fusion cutting blade 53 and a third heater 55h is housed in the receiving blade 55.

The control unit 7 controls the second heater 53h and the third heater 55h individually and adjusts the temperatures of the fusion cutting blade 53 and the receiving blade 55 to an appropriate fusion cutting temperature.

### (2-5) Detection sensor 27

A detection sensor 27 is a photoelectric sensor having a light-projecting unit 27a and a light-receiving unit 27b. The light-projecting unit 27a and the light-receiving unit 27b of the detection sensor 27 are arranged on either side of the first tube 13aa of the tube 13a as shown in FIG. 3.

The detection sensor 27 monitors the articles C passing through the inside of the first tube 13aa. The detection sensor 27 is constantly transmitting to the control unit 7 signals indicating whether or not the space between the light-projecting unit 27a and the light-receiving unit 27b is blocked by groups of articles C dropping from the collective discharge chute 215 of the combination weighing unit 2, through the first tube 13aa, and into the second tube 13ab.

### (2-6) Notifier 28

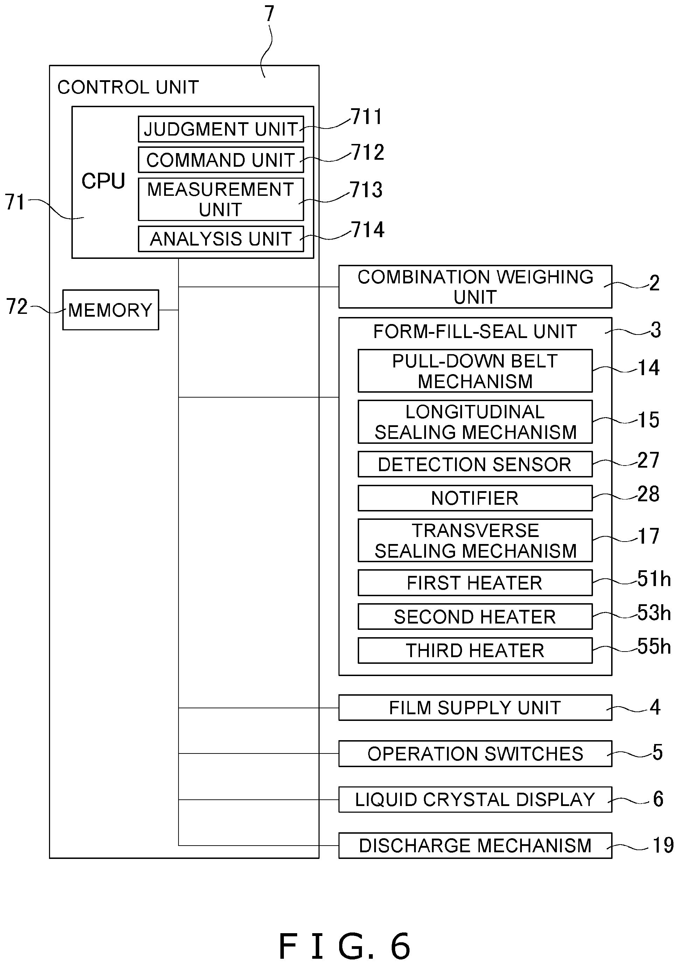

A notifier 28 (see FIG. 6) is a device that issues a notification of a fault with the bag-making and packaging unit 3, and may be an alarm, a rotating light, an electric notice board, or another device suitable for this step.

### (3) Configuration of the control unit 7

Figure 6 is a block diagram showing a control unit 7. The control unit 7 controls the actions of the driving components of the weighing and packaging system 1. Furthermore, the control unit 7 controls the timings at which articles C are discharged from the combination weighing unit 2.

The control unit 7 includes a CPU 71 and a memory 72 connected to the CPU 71.

The combination weighing unit 2, the bag-making and packaging unit 3, the film supply unit 4, the operation switches 5, the liquid crystal display 6, and a discharge mechanism 19 are connected to the control unit 7.

The CPU 71 has a judgment unit 711, a command unit 712, a measurement unit 713, and an analysis unit 714. The command unit 712 executes control on the basis of a judgment result from the judgment unit 711.

The measurement unit 713 calculates times for groups of articles C to pass through on the basis of signals from the detection sensor 27. The values calculated by the measurement unit 713 are stored in the memory 72 as measured values in a time series. The analysis unit 714 analyzes time series data of the measured values stored in the memory 72.

### (4) Operation of bag-making and packaging unit 3

A summary of the operation by which the weighing and packaging system 1 seals the articles C in the bags B shall be described while referring to FIGS. 1, 2, and 3. The film F supplied to the bag-making and packaging unit 3 from the film supply unit 4 is wrapped about the tube 13a and shaped into a tube shape, and is conveyed downward by the pull-down belt mechanism 14.

The film F, in the shape of a cylinder wound about the tube 13a, is made to overlap at both ends extending in the up-down direction. The overlapping portions of the cylindrically shaped film F are sealed in the longitudinal direction by the longitudinal sealing mechanism 15, forming the cylindrical film Fc.

The longitudinally sealed cylindrical film Fc is removed from the tube 13a and conveyed downward to the transverse sealing mechanism 17. Using the pair of first sealing jaws 51a, 51b or the pair of second sealing jaws 52a, 52b, the transverse sealing mechanism 17 sandwiches and transversely seals the cylindrical film Fc. At this time, a bag B filled with articles C is formed below the transversely sealed portion of the cylindrical film Fc.

Above the transversely sealed portion of the cylindrical film Fc, articles C weighed by the combination weighing unit 2 drop through the tube 13a and are released into the cylindrical film Fc.

In accordance with the timing at which the cylindrical film Fc is transversely sealed, the transversely sealed portion of the cylindrical film Fc is cut in the transverse direction by the fusion cutting mechanism 18 (see FIG. 5) housed in the first sealing jaw 51a or the second sealing jaw 52a. The bag B filled with articles C is thereby cut away from the trailing cylindrical film Fc.

As described above, bags B filled with articles C are continuously manufactured. The manufactured bags B are then transported to a thickness checker, a weight checker, and other devices by a belt conveyor (not illustrated) or the like.

The weighing and packaging system 1 of the present embodiment operates in two operation modes: a continuous mode and an intermittent mode.

In the continuous mode, the transverse sealing mechanism 17 transversely seals the cylindrical film Fc under conveyance while the transverse sealing mechanism 17 moves downward in accordance with the downward conveyance of the cylindrical film Fc.

In the intermittent mode, at the timing at which conveyance of the cylindrical film Fc is temporarily stopped, the transverse sealing mechanism 17 transversely seals the stopped cylindrical film Fc.

### (5) Control for automatically adjusting timing of transverse sealing operation

As one example, the following is a description of control for automatically adjusting the timing of the transverse sealing operation when snack foods such as potato chips are manufactured as the articles C.

The control unit 7 acquires, from a detection signal of the detection sensor 27, a timing at which a leading end and a trailing end of a group of articles C passes between the light-projecting unit 27a and the light-receiving unit 27b of the detection sensor 27, and on the basis of this signal, the control unit 7 automatically adjusts the timing at which the group of articles C drop and/or the timing at which transverse sealing is performed by the pair of first sealing jaws 51a, 51b (or the pair of second sealing jaws 52a, 52b) of the transverse sealing mechanism 17.

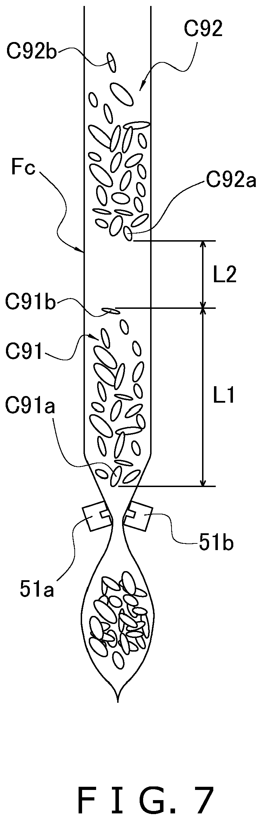

FIG. 7 is a side view of the interior of the cylindrical film Fc when groups of articles C are passing therethrough. In FIG. 7, after a first article C group C91 released N^{th} through the cylindrical film Fc, an N+1^{th} second article C group C92 drops.

A leading end of the first article C group C91 is referred to as "first leading end C91a," and a trailing end is referred to as "first trailing end C91b." A leading end of the second article C group C92 is referred to as "second leading end C92a," and a trailing end is referred to as "second trailing end C92b."

Due to signals from the detection sensor 27, the measurement unit 713 of the control unit 7 recognizes timings at which the first leading end C91a and the first trailing end C91b of the first article C group C91, and the second leading end C92a and the second trailing end C92b of the second article C group C92, pass through the height position of the detection sensor 27.

In the present control, the state in which groups of articles C drop vertically through the cylindrical film Fc is detected on a time axis, and in the transverse sealing operation, timings at which the pair of first sealing jaws 51a, 51b (or the pair of second sealing jaws 52a, 52b) do not bite the articles C are adjusted.

For this purpose, the measurement unit 713 calculates a charge length L1 and a separation length L2 and uses these lengths to adjust a cycle time.

For the charge length L1, for example, an interval between the first leading end C91a and the first trailing end C91b of the first article C group C91 is expressed in terms of time, as shown in FIG. 7.

For the separation length L2, an interval between the first trailing end C91b of the preceding first article C group C91 and the second leading end C92a of the following second article C group C92 is expressed in terms of time.

The measurement unit 713 calculates the charge length L1 and the separation length L2 every time a group of articles C is released, and the calculation result is stored as a measured value in the memory 72.

If the cycle time is the same, the separation length L2 decreases as the charge length L1 increases. The charge length L1 varies depending on the individual cycles, and changes depending on the surrounding environment and/or changes in the circumstances of the process of manufacturing the articles C.

For example, when the humidity around the bag-making and packaging unit 3 rises, there is a tendency for "tailing" to be longer and the charge length L1 of a group of articles C to be longer.

When there are changes in, *inter alia,* the size of the potatoes used as raw material, the thickness of the slices, and seasoning adhering to the surfaces of the articles C, the charge length L1 may also change steadily.

When the charge length L1 changes due to such reasons, the control unit 7 performs control in which a frequency of discharge from the combination weighing unit 2 is changed by adjusting the cycle time and the separation length L2 is optimized.

The judgment unit 711 of the control unit 7 compares the separation length L2 with a prescribed upper limit value and a prescribed lower limit value that have been set in advance.

For example, when the judgment unit 711 has judged that the separation length L2 is less than the prescribed lower limit value, the command unit 712 makes a setting change increasing the cycle time to reduce processing capacity, and issues an article discharge request signal to the combination weighing unit 2 so that the cycle time will be met.

In other words, the command unit 712 makes a setting change increasing the cycle time and issues a command to the combination weighing unit 2 to reduce processing speed (reduce the number of groups of articles C discharged per hour). At this time, the command unit 712 may issue a notification via the notifier 28 that the separation length L2 is less than the prescribed lower limit value.

When the judgment unit 711 has judged that the separation length L2 has been greater than the prescribed upper limit value in an average of a plurality of cycles, the command unit 712 makes a setting change reducing the cycle time (for example, a change such that the bag-making and packaging quantity per minute increases by five bags), raises the processing speeds of the film supply unit 4, the shaping mechanism 13, the pull-down belt mechanism 14, the longitudinal sealing mechanism 15, and the transverse sealing mechanism 17, and issues an article discharge request signal to the combination weighing unit 2 so that the cycle time is met.

In other words, the command unit 712 makes a setting change reducing the cycle time and issues to the combination weighing unit 2 a command to raise the processing speed of the combination weighing unit 2 (increase the number of groups of articles C discharged per hour). At this time, the command unit 712 may issue a notification via the notifier 28 that the separation length L2 is greater than the prescribed upper limit value.

It is preferable that the prescribed lower limit value and the prescribed upper limit value are set so as not to be broken by variation in the separation length L2 in each cycle.

### (6) Analysis of charge length L1

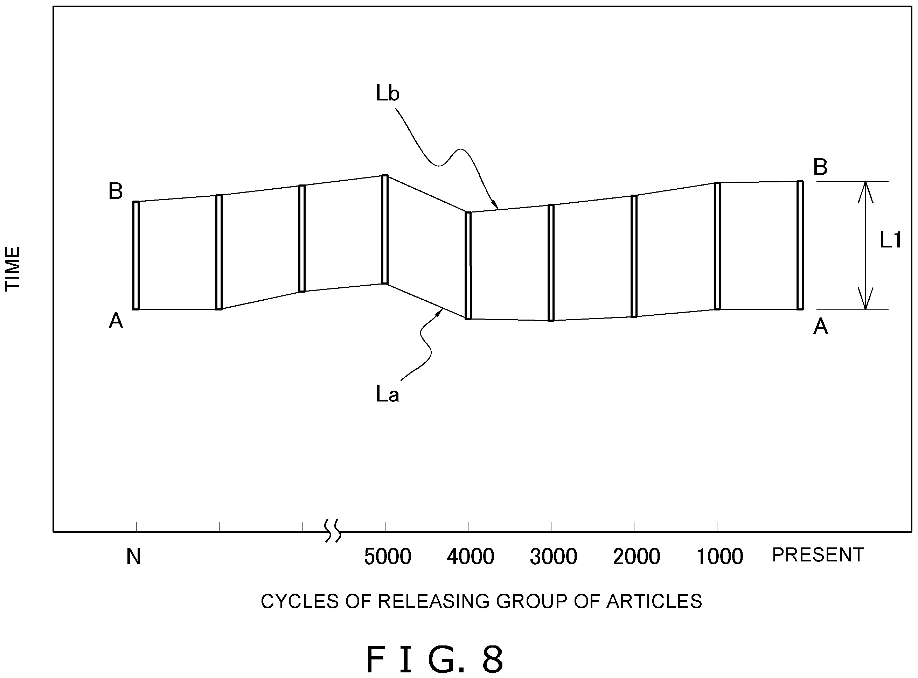

FIG. 8 is a graph showing the fluctuation tendency of the charge length L1. In FIG. 8, the vertical axis represents time and the horizontal axis represents the number of drops of a group of articles C. The number of drops is depicted such that the current drop is denoted as 1 and the past number of drops is displayed at the left of the graph.

Line La in FIG. 8 is the result when time A, which is the time from when a group of articles C is released from the combination weighing unit 2 until the leading end of the group of articles C passes between the light-projecting unit 27a and the light-receiving unit 27b of the detection sensor 27, is plotted every time a group is released.

Line Lb in FIG. 8 is the result when time B, which is the time from when a group of articles C is released from the combination weighing unit 2 until the trailing end of the group of articles C passes between the light-projecting unit 27a and the light-receiving unit 27b of the detection sensor 27, is plotted every time a group is released.

The difference between time A and time B is the charge length L1, and FIG. 8 shows a transition of the charge length L1 from a time point traced back N drops from the present, until the present.

For example, when the analysis unit 714 has analyzed that the charge length L1 is tending to be longer on the basis of the fluctuation tendency of the charge length L1 for one day, the judgment unit 711 judges that the separation length L2 will tend to be shorter, and the command unit 712 either makes a setting change so as to increase the cycle time and lowers the processing capacity or notifies the worker via the notifier 28, before the separation length L2 falls below the prescribed lower limit value.

When the analysis unit 714 has analyzed that the charge length L1 is tending to be shorter on the basis of the fluctuation tendency of the charge length L1 for one day, the judgment unit 711 judges that the separation length L2 will tend to be longer, and the command unit 712 either makes a setting change so as to reduce the cycle time and raises the processing capacity or notifies the worker via the notifier 28, before the separation length L2 rises above the prescribed upper limit value.

If the worker enters a prescribed input via the liquid crystal display 6, the fluctuation tendency of the charge length L1 will be displayed on the liquid crystal display 6. In particular, when the lot of the articles C is switched, it is possible that the fluctuation range of the charge length L1 increases, and the worker can therefore make a setting change to apparatus processing capacities while monitoring the fluctuation tendency of the charge length L1 displayed on the liquid crystal display 6.

### (7) Characteristics

(7-1)
In the weighing and packaging system 1, the analysis unit 714 ascertains a fluctuation tendency in a time series for a measured value of information pertaining to the time in which a group of articles C passes between the light-projecting unit 27a and the light-receiving unit 27b of the detection sensor 27 of the bag-making and packaging unit 3, and adjusts the transverse seal timing or cycle time in accordance with the fluctuation tendency. As a result, articles can be prevented in advance from being bitten during transverse sealing.

(7-2)
The analysis unit 714 analyzes the amount of fluctuation in the measured value in a fixed period of time, and changes the operating parameters for the bag-making and packaging unit (the processing speeds of the shaping mechanism 13, the pull-down belt mechanism 14, the longitudinal sealing mechanism 15, and the transverse sealing mechanism 17) on the basis of the analysis result.

(7-3)
The notifier 28 notifies the worker when the result of the analysis performed by the analysis unit 714 has deviated from a preset reference value.

(7-4)
In the weighing and packaging system 1, the detection sensor 27 detects a group of articles C passing between the light-projecting unit 27a and the light-receiving unit 27b. The measurement unit 713 measures the times at which the leading end and the trailing end of the group of articles C pass between the light-projecting unit 27a and the light-receiving unit 27b on the basis of a detection signal from the detection sensor 27. Therefore, it is possible to measure the length of time from when the leading end of the group of articles C passes between the light-projecting unit 27a and the light-receiving unit 27b until the trailing end passes through. Furthermore, the cycle time can be adjusted in accordance with a fluctuation tendency of this length of time.

(7-5)
In the weighing and packaging system, a worker can visually check the fluctuation tendency of the measured value in the liquid crystal display 6. An operator can ascertain the fluctuation tendency of the measured value between lots and with each lot, and can utilize the fluctuation tendency to adjust the timing or cycle time of transverse sealing at the time of initial setting or after stopping.

In addition, production capacity can be adjusted while observing the fluctuation tendency of the measured value even in steps other than that of the bag-making and packaging unit 3.

(7-6)
In the weighing and packaging system 1, if the time from when the group of articles C is discharged by the combination weighing unit 2 until the front end passes between the light-projecting unit 27a and the light-receiving unit 27b of the detection sensor 27 is displayed in a time series, the fluctuation tendency of the time the group of articles C drop will be understood, and the timing of transverse sealing can be adjusted in accordance with the fluctuation tendency. For example, when the time the group of articles C drop is tending to lag, the timing of transverse sealing is delayed.

(7-7)
In the weighing and packaging system 1, the length of time from when the leading end of the group of articles C passes between the light-projecting unit 27a and the light-receiving unit 27b of the detection sensor 27 until the trailing end passes through is understood, and it is therefore possible to adjust the cycle time in accordance with the fluctuation tendency of this length of time. For example, when the length of time extends, the group of articles will not drop within the cycle time; therefore, capacity will be limited

(7-8)
The liquid crystal display 6 displays the fluctuation tendency of the measured value using the time series data of the measured value stored in the memory 72.

(7-9)
In the weighing and packaging system 1, the liquid crystal display 6 displays the measured value by length of the measured value for each timing at which groups of articles C are released.

### (8) Modifications

In the above embodiment, the clear acrylic first tube 13aa is arranged on an upper portion of the tube 13a (on the side near the combination weighing unit 2), and the light-projecting unit 27a and light-receiving unit 27b of the detection sensor 27 are arranged on either side of the first tube 13aa. However, the height position of the detection sensor is not limited to this position.

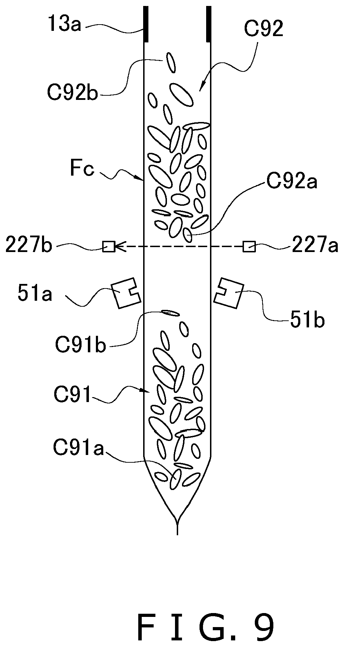

FIG. 9 is a side view of a cylindrical film Fc for showing a height position of a detection sensor 227 of a weighing and packaging system 1 according to a modification.

In FIG. 9, the detection sensor 227 includes an X-ray irradiation unit 227a that irradiates the cylindrical film Fc with X-rays and a sensor 227b that receives X-rays transmitted through the cylindrical film Fc. The X-ray irradiation unit 227a and the sensor 227b are arranged between the lowest end of the tube 13a and the transverse sealing mechanism 17.

Among X-rays, the X-rays radiated from the X-ray irradiation unit 227a are soft X-rays having weak penetrative power. Soft X-rays have weak penetrating power but good sensitivity to thin objects such as films and potato chips. Therefore, soft X-rays are suitable for observing articles passing through the cylindrical film Fc.

### REFERENCE SIGNS LIST

- 1: Weighing and packaging system
- 2: Combination weighing unit (weighing unit)
- 3: Bag-making and packaging unit (bag-making and packaging unit)
- 6: Liquid crystal display (display unit)
- 713: Measurement unit
- 72: Memory (storage unit)
- 714: Analysis unit
- 27: Detection sensor (sensor)
- 28: Notifier (notification unit)
- F: Film (packaging material)
- Fc: Cylindrical film (cylindrical packaging material)

### CITATION LIST

### PATENT LITERATURE

(Patent Literature 1) Japanese Laid-open Patent Publication No. 2003-11927

## Claims

1. A weighing and packaging system comprising
a weighing unit that discharges a weighed group of articles,
a bag-making and packaging unit that forms a packaging material into a cylinder while conveying the packaging material and guides the group of articles discharged from the weighing unit into the cylindrical packaging material,
a measurement unit that measures information pertaining to a time in which the group of articles discharged from the weighing unit passes through a prescribed position in the bag-making and packaging unit,
a storage unit that stores a measured value acquired by the measurement unit as time series data, and
an analysis unit that analyzes the time series data stored in the storage unit.

2. The weighing and packaging system according to claim 1, wherein
the analysis unit analyzes an amount of fluctuation in the measured value in a fixed period of time, and changes operating parameters for the bag-making and packaging unit on the basis of the analysis result.

3. The weighing and packaging system according to claim 1 or 2,
further comprising a notification unit that notifies a worker when the result of the analysis performed by the analysis unit deviates from a preset reference value.

4. The weighing and packaging system according to any one of claims 1 to 3, wherein
the system further comprises a sensor that senses the group of articles passing through the prescribed position, and
the measurement unit measures times at which a front end and a rear end of the group of articles passes through the prescribed position on the basis of a sensory value of the sensor.

5. The weighing and packaging system according to any one of claims 1 to 4,
further comprising a display unit that displays the fluctuation tendency of the measured value using the time series data.

6. The weighing and packaging system according to claim 5, wherein
the display unit displays a time from when the group of articles is discharged from the weighing unit until the front end of the group of articles passes through the prescribed position.

7. The weighing and packaging system according to claim 5 or 6, wherein
the display unit displays times at which the front end and rear end of the group of articles pass through the prescribed position.

8. A weighing and packaging system comprising
a weighing unit that discharges a weighed group of articles,
a bag-making and packaging unit that forms a packaging material into a cylinder while conveying the packaging material and guides the group of articles discharged from the weighing unit into the cylindrical packaging material,
a measurement unit that measures information pertaining to a time in which the group of articles discharged from the weighing unit passes through a prescribed position in the bag-making and packaging unit,
a storage unit that stores a measured value acquired by the measurement unit as time series data, and
a display unit that displays a fluctuation tendency of the measured value using the time series data.

9. The weighing and packaging system according to any one of claims 5 to 8, wherein
the display unit displays the measured value by length of the measured value for each timing at which articles drop.
